# EUROPEAN PATENT SPECIFICATION

(11) **EP 3 040 615 B1**
(45) Date of publication and mention of the grant of the patent: **27.01.2021**
(21) Application number: 15200719.1
(22) Date of filing: 17.12.2015
(51) Int. Cl.: F23R 3/00, F23R 3/06

(54) **COMBUSTOR DILUTION HOLE ACTIVE HEAT TRANSFER CONTROL APPARATUS AND SYSTEM**
VORRICHTUNG UND SYSTEM ZUR REGELUNG DER AKTIVEN BRENNKAMMERVERDÜNNUNGSLOCHWÄRMEÜBERTRAGUNG
SYSTÈME ET APPAREIL DE COMMANDE DE TRANSFERT DE CHALEUR ACTIVE POUR TROU DE DILUTION DE CHAMBRE DE COMBUSTION

(30) Priority: 17.12.2014 US 201462093162 P
(43) Date of publication of application: 06.07.2016
(73) Proprietor: United Technologies Corporation, Farmington, CT 06032 (US)
(72) Inventor: BURD, Steven W., Cheshire, CT Connecticut 06410-0312 (US)
(74) Representative: Dehns

(56) References cited:
- EP-A1- 1 777 458
- EP-A1- 1 818 613
- EP-A2- 1 363 075
- WO-A1-2014/112992
- US-A1- 2001 046 651
- US-A1- 2014 216 044
- US-B1- 7 000 396

## Description

### FIELD

The present disclosure relates generally to a gas turbine component and, more specifically, to a combustor component.

### BACKGROUND

A gas turbine engine may include a turbine section with multiple rows or stages of stator vanes and rotor blades that interact or react with a high temperature gas flow to create mechanical power. In a gas turbine engine, the turbine rotor blades drive the compressor and an electric generator to generate electrical power.

The efficiency of the gas turbine engine can be increased by passing a higher temperature gas flow through the turbine. However, the turbine inlet temperature is limited to the vane and blade (airfoils) material properties and the cooling capabilities of these airfoils. The first stage airfoils are exposed to the highest temperature gas flow since these airfoils are located immediately downstream from the combustor. The temperature of the gas flow passing through the turbine progressively decreases as the rotor blade stages extract energy from the gas flow. The leading edge of the vane and blade airfoils is exposed to high temperature gas flow.

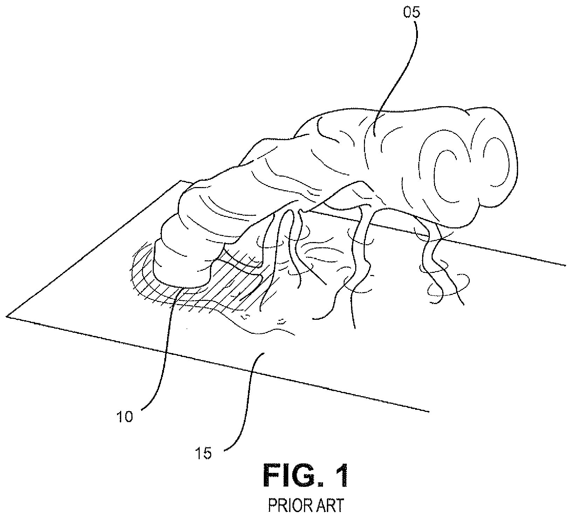

Air usually enters the combustor with enough momentum to act like an air jet in cross-flow. An air jet from an air jet opening 10 in cross-flow (see prior art FIG. 1) is a complex interaction and results in undesired combustor liner distress (i.e. oxidation) local to dilution and trim holes. This occurs for several reasons. The presence of this air jet disturbs the approaching flow along the walls of and pressure gradients within the combustor and promotes the formation of secondary flow or vortical structures 05. These secondary flows and vortical structures 05 disrupt (and reduce) the cooling in the vicinity of the combustor liners by mixing with the cooling air and driving hot gases from the combustion process to liner surfaces, such as the top coat 15 of the combustor panel. Since this mixture is undergoing combustion, it can greatly exceed the melting point of the combustor liner materials. In addition, the air jets provide a blockage for the approaching flow. This means that the flow accelerates around the dilution holes on the combustor liner surfaces, such as the top coat 15, increasing the heat transfer and the strength of the local secondary flows. Moreover, the jet in cross-flow may create a wake that promotes downwash of hot gases around the holes. The interaction with the approaching flow may not be uniform given swirl and non-homogeneous fuel-air distributions produced by the forward fuel nozzles, air swirlers, the flow of cooling air and the flow of air introduction. This could create a biased distress pattern on the combustor liner surfaces, such as the top coat 15.

A prior art gas turbine engine component having the features of the preamble of claim 1 is disclosed in EP 1 363 075 A2.

### SUMMARY

From one aspect, the present invention provides a gas turbine component in accordance with claim 1.

From another aspect, the present invention provides a method of deflecting secondary flows produced within a combustor in accordance with claim 6.

Features of embodiments are recited in the dependent claims.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates an isometric view of a prior art air jet from an air jet opening in cross-flow creating a secondary flow and vortical structure;
FIG. 2 illustrates a cross-sectional view of an exemplary gas turbine engine, in accordance with various embodiments;
FIG. 3 illustrates an isometric view of a portion of the combustor, in accordance with various embodiments;
FIG. 4 illustrates cross-sectional view of a dilution hole and air jet outside the scope of the claims;
FIG. 5A illustrates cross-sectional view of a dilution hole and air jet fed by a common source in accordance with various embodiments;
FIG. 5B illustrates cross-sectional view of an air jet fed by a plurality of sources in accordance with various embodiments; and
FIGS. 6A-6D illustrates top views of various dilution hole and air jet breakout layouts in accordance with various embodiments and an arrangement outside the scope of the claims.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not of limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Furthermore, any reference to singular includes plural embodiments, and any reference to more than one component or step may include a singular embodiment or step. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

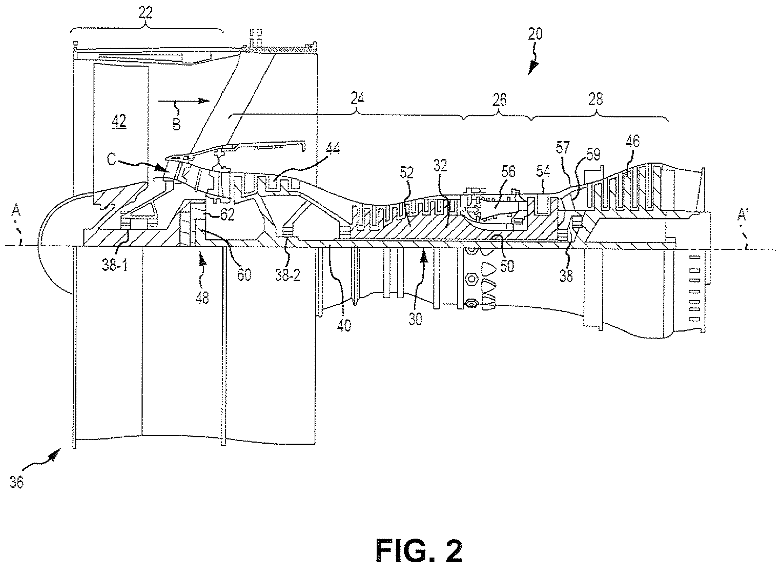

In various embodiments and with reference to FIG. 2, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmenter section among other systems or features. In operation, fan section 22 can drive air along a bypass flow-path B while compressor section 24 can drive air for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 via one or more bearing systems 38 (shown as bearing system 38-1 and bearing system 38-2 in FIG. 2). It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure (or first) compressor section 44 (also referred to a low pressure compressor) and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor ("HPC") 52 (e.g., a second compressor section) and high pressure (or second) turbine section 54. A combustor 56 may be located between HPC 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low pressure compressor 44 then HPC 52, mixed and burned with fuel in combustor 56, then expanded over high pressure turbine 54 and low pressure turbine 46. Mid-turbine frame 57 includes airfoils 59 which are in the core airflow path. Low pressure turbine 46, and high pressure turbine 54 rotationally drive the respective low speed spool 30 and high speed spool 32 in response to the expansion.

Gas turbine engine 20 may be, for example, a high-bypass geared aircraft engine. In various embodiments, the bypass ratio of gas turbine engine 20 may be greater than about six (6:1). In various embodiments, the bypass ratio of gas turbine engine 20 may be greater than ten (10:1). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 (2:3:1) and low pressure turbine 46 may have a pressure ratio that is greater than about 5 (5:1). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans.

In various embodiments, the next generation of turbofan engines may be designed for higher efficiency which is associated with higher pressure ratios and higher temperatures in the HPC 52. These higher operating temperatures and pressure ratios may create operating environments that may cause thermal loads that are higher than the thermal loads encountered in conventional turbofan engines, which may shorten the operational life of current components.

In various embodiments, HPC 52 may comprise alternating rows of rotating rotors and stationary stators. Stators may have a cantilevered configuration or a shrouded configuration. More specifically, a stator may comprise a stator vane, a casing support and a hub support. In this regard, a stator vane may be supported along an outer diameter by a casing support and along an inner diameter by a hub support. In contrast, a cantilevered stator may comprise a stator vane that is only retained and/or supported at the casing (e.g., along an outer diameter).

In various embodiments, rotors may be configured to compress and spin a fluid flow. Stators may be configured to receive and straighten the fluid flow. In operation, the fluid flow discharged from the trailing edge of stators may be straightened (e.g., the flow may be directed in a substantially parallel path to the centerline of the engine and/or HPC) to increase and/or improve the efficiency of the engine and, more specifically, to achieve maximum and/or near maximum compression and efficiency when the straightened air is compressed and spun by rotor 64.

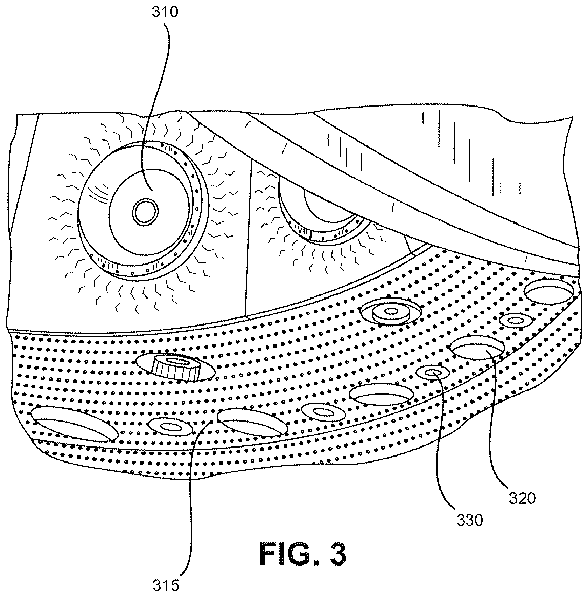

According to various embodiments and with reference to FIG. 3, the systems and apparatus disclosed herein are configured to reduce the local temperature around the dilution holes. This may increase the lifespan of the associated parts. The use of air jets configured to control and/or manipulate the flow field in the vicinity of these air feed, dilution holes 320 or trim holes 330. As used herein dilution holes 320 or trim holes 330 are, in general, apertures in which a flow of air is introduced that becomes part of the combustion process.

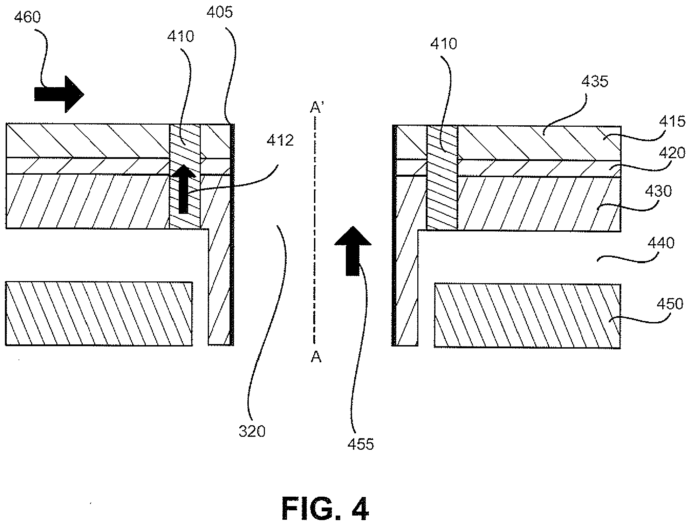

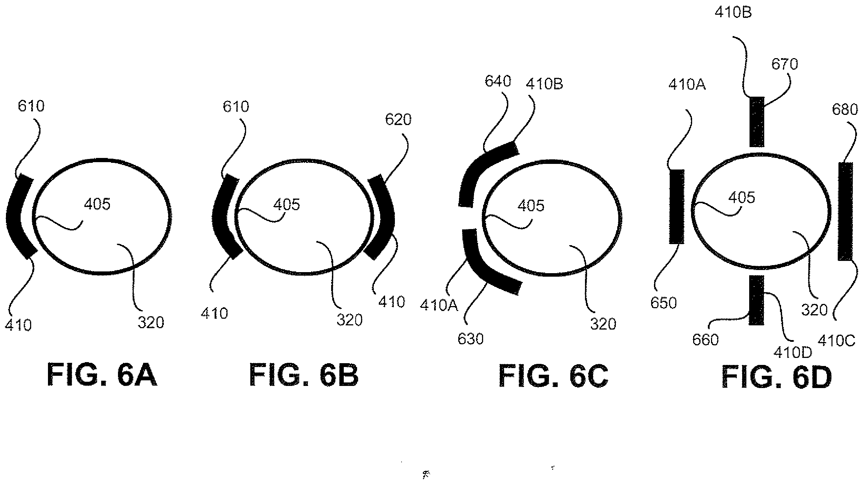

In vanes/nozzle guide vanes in turbines, it has been shown that high-momentum air flows upstream (towards a dilution hole) on the leading surface can change the secondary flow strength, trajectory and other characteristics about the endwalls. In other words, air jets 410 (with brief reference to FIG. 4) can be used to manage, control and deflect the secondary flows that are produced within the combustor. Discrete, elongated air jets 410 that supply high-momentum flow on a portion, such as the flow path side, on the top coat 415 layer of a combustor panel 415 around the exit of dilution hole 320 on a combustor panel. With reference to FIG. 4, the air jets 410 are configured to affect the complex flows produced by air flow 460 in cross-flow, specifically those causing panel distress. Air flow 460 may be a cooling boundary layer/fuel air mixture flow of air/fluid. Air jets 410 may be arranged and/or oriented in a range of patterns to impact the flows at the upstream side of the dilution hole 320, the sides of the dilution hole 320 or the aft region (downstream from) the dilution hole 320 (with brief reference to FIGS. 6A through 6D).

Very high heat transfer rates exist in the vicinity of the dilution holes 320, which at times, may lead to distress. Historically, cooling holes in those areas locally cool the portion of the panel in its immediate vicinity. Air jets 410 are configured to introduce a large enough flow with momentum to manipulate the air flow 460 that is approaching the dilution hole 320, such as from the upstream side of the dilution hole 320. This may reduce undesired vortical structures, such as vortical structures 05 depicted in FIG. 1 from occurring. In this way, air jets 410 are configured to modify the flow of air flow 460 to keep this downwash flow and/or a recirculating flow and associated vortical structures from bringing the hot temperatures within the combustor down to the liner surfaces of the combustor, such as the top coat 415 of the combustor panel.

Rather than air jets 410 being solely configured as a cooling hole such as trim hole 330, air jets 410 tend to have fairly large aspect ratios. Also, air jets 410 tend to be distributed around the dilution hole in a manner configured to manipulate the boundary layer flow of air flow 460 that is interacting with the dilution hole 320 breakout at the top coat 415 of the combustor panel. Air jets 410 have flow areas that are an order of magnitude larger than adjacent cooling holes, e.g., trim holes 330 (e.g., 10 times larger, extending greater than 0.100" (0.254 cm) in length). Stated another way, while cooling holes may be sized on the order of .02 inches (0.0508 cm) to .05 inches (0.127 cm), air jets 410 are greater than about a 1/8 of an inch (0.3175cm). Notably, dilution holes 320 tend to be 1/4 of an inch (0.635cm) to an inch (2.54 cm). The flow area of the air jet 410 may be substantially equal to or less than the flow area of the dilution hole 320.

Air jets 410 are, in general, located in close proximity to a dilution hole 320. Specifically, air jets 410 are located close enough to the leading edge 405 of the dilution hole 320 to manipulate a pressure gradient of the dilution hole 320. The shape of the opening and/or breakout of the air jet 410 mirrors a portion of the shape of the opening of the dilution hole 320. Stated another way, the opening of the air jet 410 mirrors the curvature of the opening of the dilution hole 320.

According to various arrangements outside the scope of the claims, the air jets 410 may extend through the panel, thus, be fed by the air flow 460 across the combustor panel (as shown in FIG. 4). Notably, as depicted in FIG. 4, the air jet 410 passes through the top coat 415, the bond coat 420, and the base metal 430, extending to the liner panel-shell gap 440. As described by its name, the liner panel-shell gap 440 may be between the liner shell 450 and the panel 435, wherein the panel is comprised of the top coat 415, the bond coat 420, and the base metal 430. In this way, the flow of air 412 exiting the air jet 410 may have less momentum than the flow of air 455 exiting the dilution hole 320. In this way, the flow of air 455 exiting the dilution hole 320 may affect the air flow 460 across the combustor panel without adversely impacting the combustion process.

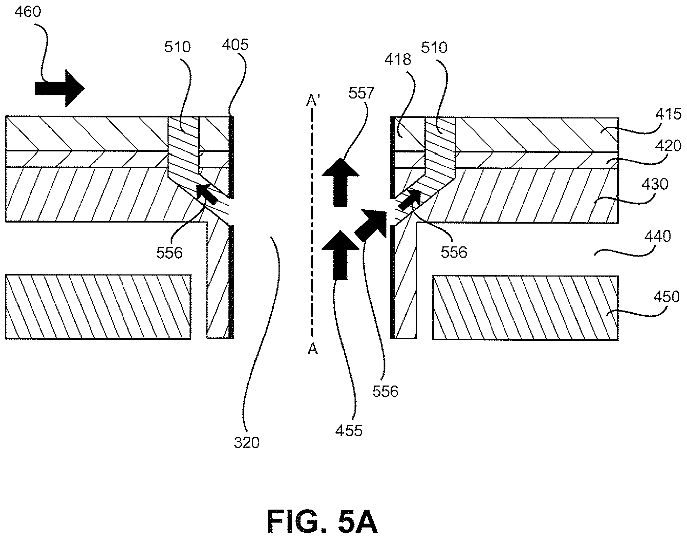

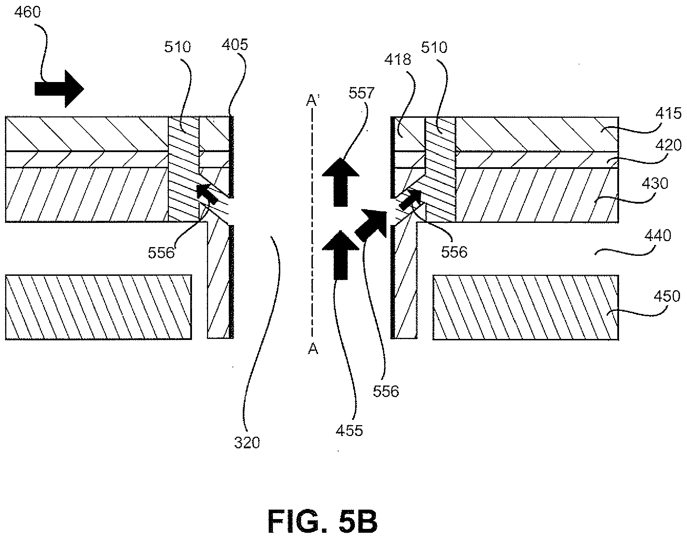

According to various embodiments with reference to FIGs. 5A and 5B, the air jets 510 may extend through a grommet 418 or other feature of the dilution hole 320 to take advantage of the total liner pressure drop (as depicted in FIGs. 5A). In this way, the dilution hole 320 air flow and pressure is the source of the cooling fluid for the air jet 510. In a complementary embodiment, as depicted in FIG. 5B, a branch of the air jet 510 extends into the wall of the dilution hole in addition to extending into the supply plenum 450, to take advantage of the total linear pressure drop. In this way, the flow of air to air jet 510 is also sourced from a diffuser plenum feed (e.g., where air flow 455 is sourced). Local added thickness or webs may be added to the structural features of the dilution hole 320 to accommodate this design. With continued reference to FIGs. 5A and 5B, the air flow 556 to air jet 510 is depicted as being fed from the panel. Based on the geometry of air jet 510 the velocity of air flow 556 is less than the velocity of air flow 557 exiting the dilution hole 320. Stated another way, air flow 455 may be partially diverted into air flow 557 and air flow 556.

According to various embodiments, each air jet 410 and 510 geometry may be specifically tailored to complement the heat pattern associated with a specific associated dilution hole 320. In this way, each panel may comprise a wide arrangement of air jet 410 and air jet 510 geometries. For instance, FIG. 6A depicts a first air jet breakout geometry 610 of an air jet 410 disposed forward of the upstream side of the dilution hole. The first air jet breakout geometry 610 mirrors a portion of the curved wall of dilution hole 320 in accordance with various embodiments. FIG. 6B depicts a first air jet breakout geometry 610 of an air jet 410 disposed forward of the upstream side of the dilution hole 320 and a second first air jet breakout geometry 620 of the air jet 410 aft of the dilution hole 320.

FIG. 6C depicts a pair of air jets 410A and 410B oriented forward of the upstream side of the dilution hole 320 in accordance with various embodiments. FIG. 6D depicts various air jets 410A, 410B, 410C, and 410D oriented in various locations around the breakout of the dilution hole 320 in accordance with arrangements outside the scope of the claims.

According to various embodiments, air jets 410 and 510 are configured to improve durability and life of the combustor panels and associated apparatus. Air jets 410, 510 manipulate the air flows local to where heat transfer promotes part distress with limited effect on the bulk combustion. The systems and methods described herein may be applicable to other portions of combustor panels subject to distress due to high heat transfer including igniter holes, rails, and studs/attachments.

The designs described herein apply to both a double wall panel construction as well as a single wall construction. The designs described herein apply to dilution holes having an extended and open dilution hole lip orientation. In this way, air jets 410 and 510 may be adapted to facilitate a wide range of dilution hole geometries and/or grommets with a wide range of shapes and configurations. For instance, air jets 410 and 510 may be adapted to facilitate a dilution hole breakout with a rounded edge and/or a dilution hole breakout that is at least partially extended into the flow path 460.

Benefits, other advantages and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and nonlimiting.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A gas turbine component comprising:
a combustor wall;
a dilution hole (320) and a cooling hole (330) located within the combustor wall, configured to conduct a flow of cooling fluid; and
**characterised by** further comprising
an air jet (510) located within the combustor wall positioned in close proximity to the dilution hole (320) and adjacent the cooling hole (330), wherein:
an air flow (556) from the air jet (510) is configured to deflect secondary flows produced within a combustor (56);
a flow area of the air jet (510) is an order of magnitude greater than the cooling hole (330);
the air jet (510) is located in a proximity sufficient to a leading edge (405) of the dilution hole (320) such that the air flow (556) from the air jet (510) influences a pressure gradient in the vicinity of the exit of the dilution hole (320);
the air jet (510) is located on the upstream side of the dilution hole (320);
a shape of an opening of the air jet (510) mirrors a curvature of an opening of the dilution hole (320); and
the air jet (510) extends through the wall defining the dilution hole (320) to provide an air jet inlet fed by an airflow passing through the dilution holes (320).

2. The gas turbine component of any preceding claim, further comprising a plurality of air flows (556) from a plurality of air jets (510) positioned in close proximity to the dilution hole (320), wherein the plurality of air flows (556) from the plurality of air jets (510) combine to manipulate a pressure gradient in the vicinity of the exit of the dilution hole (320).

3. The gas turbine component of any preceding claim, wherein the air jet (510) is one of a pair of air jets (510) oriented forward of the leading edge (405) of the dilution hole (320) or wherein a second air jet (510) is located aft of the dilution hole (320).

4. The gas turbine component of any preceding claim, wherein a flow area of the air jet (510) is substantially equal to or less than the flow area of the dilution hole (320).

5. The gas turbine component of any preceding claim, wherein the air jet (510) also extends through the combustor wall to be fed by a different source as compared to a source of the flow of cooling fluid to the dilution hole (320).

6. A method of deflecting secondary flows produced within a combustor (56) comprising:
positioning an air jet (510) in close proximity to a dilution hole (320) in a panel (435); and
expelling an air flow (556) from the air jet (510) to manipulate a pressure gradient in the vicinity of the exit of the dilution hole (320), wherein:
the air jet (510) is adjacent a cooling hole (330) in the panel (435); the flow area of the air jet (510) is an order of magnitude greater than the cooling hole (330);
the air jet (510) is located in a proximity sufficient to a leading edge (405) of the dilution hole (320) such that the air flow (556) from the air jet (510) influences a pressure gradient in the vicinity of the exit of the dilution hole (320);
the air jet (510) is located on the upstream side of the dilution hole (320);
a shape of an opening of the air jet (510) mirrors a curvature of an opening of the dilution hole (320);
the air jet (510) extends through the wall defining the dilution hole (320) to form an air jet inlet such that the source of the air flow (556) to the air jet (510) passes through the dilution hole (320).

## Patentansprüche

1. Gasturbinenbauteil, umfassend:
eine Brennkammerwand;
ein Verdünnungsloch (320) und ein Kühlloch (330), die innerhalb der Brennkammerwand angeordnet sind und die so konfiguriert sind, dass sie einen Strom von Kühlfluid leiten; und
**dadurch gekennzeichnet, dass** es ferner Folgendes umfasst eine Luftdüse (510), die innerhalb der Brennkammerwand in enger Nähe zum Verdünnungsloch (320) und angrenzend an das Kühlloch (330) positioniert angeordnet ist, wobei:
ein Luftstrom (556) aus der Luftdüse (510) so konfiguriert ist, dass er sekundäre Ströme, die innerhalb einer Brennkammer (56) erzeugt werden, ablenkt;
ein Strömungsquerschnitt der Luftdüse (510) eine Größenordnung größer als das Kühlloch (330) ist;
die Luftdüse (510) in einer ausreichenden Nähe zu einer Vorderkante (405) des Verdünnungslochs (320) angeordnet ist, so dass der Luftstrom (556) aus der Luftdüse (510) einen Druckgradienten in der Nähe des Auslasses des Verdünnungslochs (320) beeinflusst;
die Luftdüse (510) an der stromaufwärtigen Seite des Verdünnungslochs (320) angeordnet ist;
eine Form einer Öffnung der Luftdüse (510) eine Krümmung einer Öffnung des Verdünnungslochs (320) widerspiegelt; und
sich die Luftdüse (510) durch die Wand erstreckt, die das Verdünnungsloch (320) definiert, um einen Luftdüseneinlass bereitzustellen, der durch einen Luftstrom versorgt wird, der durch die Verdünnungslöcher (320) strömt.

2. Gasturbinenbauteil nach einem der vorstehenden Ansprüche, ferner umfassend eine Vielzahl von Luftströmen (556) aus einer Vielzahl von Luftdüsen (510), die in enger Nähe zum Verdünnungsloch (320) angeordnet sind, wobei die Vielzahl von Luftströmen (556) aus der Vielzahl von Luftdüsen (510) zusammenwirken, um einen Druckgradienten in der Nähe des Auslasses des Verdünnungslochs (320) zu beeinflussen.

3. Gasturbinenbauteil nach einem der vorstehenden Ansprüche, wobei die Luftdüse (510) eine aus einem Paar von Luftdüsen (510) ist, die vor der Vorderkante (405) des Verdünnungslochs (320) ausgerichtet sind oder wobei eine zweite Luftdüse (510) hinter dem Verdünnungsloch (320) angeordnet ist.

4. Gasturbinenbauteil nach einem der vorstehenden Ansprüche, wobei ein Strömungsquerschnitt der Luftdüse (510) im Wesentlichen kleiner oder gleich dem Strömungsquerschnitt des Verdünnungslochs (320) ist.

5. Gasturbinenbauteil nach einem der vorstehenden Ansprüche, wobei sich die Luftdüse (510) auch durch die Brennkammerwand erstreckt, um von einer anderen Quelle im Vergleich zu einer Quelle des Stroms von Kühlfluid zum Verdünnungsloch (320) versorgt zu werden.

6. Verfahren zum Ablenken sekundärer Ströme, die innerhalb einer Brennkammer (56) erzeugt werden, umfassend:
Anordnen einer Luftdüse (510) in enger Nähe zu einem Verdünnungsloch (320) in einer Platte (435); und
Ausstoßen eines Luftstroms (556) aus der Luftdüse (510), um einen Druckgradienten in der Nähe des Auslasses des Verdünnungslochs (320) zu beeinflussen, wobei:
die Luftdüse (510) an ein Kühlloch (330) in der Platte (435) angrenzt; der Strömungsquerschnitt der Luftdüse (510) eine Größenordnung größer als das Kühlloch (330) ist;
die Luftdüse (510) in ausreichender Nähe zu einer Vorderkante (405) des Verdünnungslochs (320) derart abgeordnet ist, dass der Luftstrom (556) aus der Luftdüse (510) einen Druckgradienten in der Nähe des Auslasses des Verdünnungslochs (320) beeinflusst;
die Luftdüse (510) an der stromaufwärtigen Seite des Verdünnungslochs (320) angeordnet ist;
eine Form einer Öffnung der Luftdüse (510) eine Krümmung einer Öffnung des Verdünnungslochs (320) widerspiegelt;
sich die Luftdüse (510) durch die Wand erstreckt, die das Verdünnungsloch (320) definiert, um einen Luftdüseneinlass derart auszubilden, dass die Quelle des Luftstroms (556) zur Luftdüse (510) durch das Verdünnungsloch (320) strömt.

## Revendications

1. Composant de turbine à gaz comprenant :
une paroi de chambre de combustion ;
un trou de dilution (320) et un trou de refroidissement (330) situés à l'intérieur de la paroi de chambre de combustion, conçus pour conduire un écoulement de fluide de refroidissement ; et
**caractérisé en ce qu'**il comprend en outre
un jet d'air (510) situé à l'intérieur de la paroi de chambre de combustion positionné à proximité immédiate du trou de dilution (320) et adjacent au trou de refroidissement (330),
dans lequel :
un flux d'air (556) provenant du jet d'air (510) est conçu pour dévier des flux secondaires produits à l'intérieur d'une chambre de combustion (56) ;
une zone d'écoulement du jet d'air (510) est d'un ordre de grandeur supérieur au trou de refroidissement (330) ;
le jet d'air (510) est situé à une proximité suffisante d'un bord d'attaque (405) du trou de dilution (320) de sorte que le flux d'air (556) provenant du jet d'air (510) influence un gradient de pression dans l'environnement de la sortie du trou de dilution (320) ;
le jet d'air (510) est situé sur le côté amont du trou de dilution (320) ;
une forme d'une ouverture du jet d'air (510) reflète une courbure d'une ouverture du trou de dilution (320) ; et
le jet d'air (510) s'étend à travers la paroi définissant le trou de dilution (320) pour fournir une entrée de jet d'air alimentée par un flux d'air passant à travers les trous de dilution (320).

2. Composant de turbine à gaz selon une quelconque revendication précédente, comprenant en outre une pluralité de flux d'air (556) provenant d'une pluralité de jets d'air (510) positionnés à proximité immédiate du trou de dilution (320), dans lequel la pluralité de flux d'air (556) provenant de la pluralité de jets d'air (510) se combinent pour manipuler un gradient de pression dans l'environnement de la sortie du trou de dilution (320).

3. Composant de turbine à gaz selon une quelconque revendication précédente, dans lequel le jet d'air (510) est l'un d'une paire de jets d'air (510) orienté vers l'avant du bord d'attaque (405) du trou de dilution (320) ou dans lequel un second jet d'air (510) est situé à l'arrière du trou de dilution (320).

4. Composant de turbine à gaz selon une quelconque revendication précédente, dans lequel une zone d'écoulement du jet d'air (510) est sensiblement égale ou inférieure à la zone d'écoulement du trou de dilution (320).

5. Composant de turbine à gaz selon une quelconque revendication précédente, dans lequel le jet d'air (510) s'étend également à travers la paroi de chambre de combustion pour être alimenté par une source différente par rapport à une source de l'écoulement de fluide de refroidissement vers le trou de dilution (320).

6. Procédé de déviation de flux secondaires produits dans une chambre de combustion (56) comprenant :
le positionnement d'un jet d'air (510) à proximité immédiate d'un trou de dilution (320) dans un panneau (435) ; et
l'expulsion d'un flux d'air (556) provenant du jet d'air (510) pour manipuler un gradient de pression dans l'environnement de la sortie du trou de dilution (320), dans lequel :
le jet d'air (510) est adjacent à un trou de refroidissement (330) dans le panneau (435) ; la zone d'écoulement du jet d'air (510) est d'un ordre de grandeur supérieur au trou de refroidissement (330) ;
le jet d'air (510) est situé à une proximité suffisante d'un bord d'attaque (405) du trou de dilution (320) de sorte que le flux d'air (556) provenant du jet d'air (510) influence un gradient de pression dans l'environnement de la sortie du trou de dilution (320) ;
le jet d'air (510) est situé sur le côté amont du trou de dilution (320) ;
une forme d'une ouverture du jet d'air (510) reflète une courbure d'une ouverture du trou de dilution (320) ;
le jet d'air (510) s'étend à travers la paroi définissant le trou de dilution (320) pour former une entrée de jet d'air de sorte que la source du flux d'air (556) vers le jet d'air (510) passe à travers le trou de dilution (320).
